# FASCICULE DE BREVET EUROPEEN

(11) **EP 2 805 234 B1**
(45) Date de publication et mention de la délivrance du brevet: **17.01.2018**
(21) Numéro de dépôt: 13700337.2
(22) Date de dépôt: 17.01.2013
(51) Int. Cl.: G06F 9/45

(54) **PROCÉDÉ D'OPTIMISATION DE TRAITEMENT PARALLÈLE DE DONNÉES SUR UNE PLATEFORME MATÉRIELLE.**
VERFAHREN ZUR OPTIMIERUNG DER PARALLELEN VERARBEITUNG VON DATEN AUF EINER HARDWAREPLATTFORM
METHOD FOR OPTIMISING THE PARALLEL PROCESSING OF DATA ON A HARDWARE PLATFORM

(30) Priorité: 17.01.2012 FR 1200145
(43) Date de publication de la demande: 26.11.2014
(73) Titulaire: THALES, 92200 Neuilly-sur-Seine (FR)
(72) Inventeur: BARRERE, Rémi, F-91767 Palaiseau (FR); BRELET, Paul, F-91767 Palaiseau (FR); BARRETEAU, Michel, F-91767 Palaiseau (FR); LENORMAND, Eric, F-91767 Palaiseau (FR)
(74) Mandataire: Lavoix
(86) Numéro de dépôt international: PCT/EP2013/050844
(87) Numéro de publication internationale: WO 2013/107819

(56) Documents cités:
- US-A1- 2007 283 337
- US-A1- 2010 218 196
- US-A1- 2011 131 554

## Description

La présente invention concerne un procédé d'optimisation de traitement parallèle de données sur une plateforme matérielle comprenant une pluralité d'unités de traitement.

L'invention se situe plus généralement dans le domaine des applications de programmation aptes à exécuter plusieurs tâches en parallèle et à traiter des données de manière parallèle, sur des architectures matérielles comprenant une pluralité de d'unités de traitement ou coeurs de traitement, ou multi-coeurs (appelées architectures « multi-cores » en terminologie anglo-saxonne), et/ou multi-noeuds, comme par exemple les unités centrales Central Processing Unit (CPU) multi-coeurs ou les cartes graphiques Graphics Processing Unit (GPU).

Une carte graphique GPU comprend un grand nombre de processeurs de calcul, typiquement des centaines, on parle alors d'architecture « many-cores » ou architecture massivement parallèle. Initialement dédiées aux calculs relatifs au traitement de données graphiques, stockées sous forme de tableaux de pixels à deux ou trois dimensions, les GPUs sont actuellement utilisées de manière plus générale pour tout type de calcul scientifique nécessitant une grande puissance de calcul et un traitement parallèle des données.

Classiquement, la mise en oeuvre d'un traitement de données parallèle sur une architecture parallèle se fait par la conception d'une application de programmation utilisant un langage approprié, comme par exemple OpenMP (Open Multi-Processing) ou OpenCL (Open Computing Language), qui permettent d'effectuer à la fois du parallélisme de tâches et du parallélisme de données.

Néanmoins, les langages de programmation parallèle offrent de nombreuses possibilités, quant à la répartition des calculs à effectuer, au nombre de tâches à exécuter en parallèle et au découpage de données en groupes de données à traiter en parallèle. Ainsi, la conception de code de programmation optimisé pour une exécution en parallèle est difficile à obtenir.

De plus, l'optimisation en termes de temps d'exécution est fortement dépendante de l'architecture de la plateforme matérielle sur laquelle le code de l'application de programmation est exécuté. Par exemple, typiquement, le nombre de tâches exécutables en parallèle est dépendant du nombre d'unités de traitement disponibles, mais la rapidité d'exécution est également dépendante de la rapidité des accès mémoire et des transferts de données.

Ainsi, il a été constaté que le temps d'exécution du code d'une application de programmation est variable selon l'architecture matérielle des processeurs ou cartes graphiques mis en oeuvre.

Le document US 2010/218 196 A1 décrit une méthode d'optimisation de code source, exécuté sur un premier dispositif, ayant pour objectif d'optimiser l'exécution du code source sur un autre dispositif ayant au moins deux unités de traitement.

Il existe donc un besoin de faciliter la génération de code de programmation optimisé pour le traitement parallèle de données sur une plateforme matérielle comportant une pluralité d'unités de traitement.

A cet effet, l'invention propose un procédé d'optimisation de traitement parallèle de données sur une plateforme matérielle comprenant au moins une unité de calcul comprenant une pluralité d'unités de traitement aptes à exécuter en parallèle une pluralité de tâches exécutables, dans lequel l'ensemble de données à traiter est décomposé en sous-ensembles de données, une même suite d'opérations étant effectuée sur chaque sous-ensemble de données. Le procédé de l'invention comprend les étapes de :
- obtention du nombre maximal de sous-ensembles de données à traiter par une même suite d'opérations, et d'un nombre maximal de tâches exécutables en parallèle par une unité de calcul de la plateforme matérielle,
- détermination d'au moins deux découpages de traitement, chaque découpage de traitement correspondant au découpage de l'ensemble de données en un nombre de groupes de données, et à l'assignation d'au moins une tâche exécutable, apte à exécuter ladite suite d'opérations, à chaque sous-ensemble de données dudit groupe de données, le nombre total de tâches exécutables par groupe de données étant inférieur ou égal audit nombre maximal de tâches,
- obtention d'un programme comportant des instructions de code de programmation mettant en oeuvre ledit découpage de traitement,
- obtention d'une valeur d'une mesure de performance d'exécution associée à l'exécution dudit programme sur ladite plateforme matérielle,
- sélection du découpage de traitement permettant d'obtenir une valeur de mesure optimale selon un critère prédéterminé, et
- obtention d'informations permettant de générer des instructions de code de programmation mettant en oeuvre ledit découpage de traitement sélectionné, le procédé comprenant, après l'étape d'obtention d'un programme comportant des instructions de code de programmation mettant en oeuvre un découpage de traitement, les étapes de :
   - exécution dudit programme sur ladite plateforme matérielle un nombre prédéterminé de fois et mémorisation de la valeur de mesure de performance d'exécution correspondant à chaque exécution, et
   - calcul d'une statistique à partir des valeurs de mesure de performance d'exécution mémorisées et
   - mémorisation de ladite statistique calculée comme valeur de mesure de performance d'exécution associée audit découpage de traitement.

Avantageusement, le procédé de l'invention permet une adaptation automatique à la plateforme matérielle d'exécution, et la génération de code de programmation optimisé pour un traitement parallèle des données, permettant d'obtenir un découpage de traitement optimal pour une mesure de performance d'exécution donnée sur la plateforme matérielle testée.

Le procédé selon l'invention peut présenter une ou plusieurs des caractéristiques ci-dessous :
- ladite valeur d'une mesure de performance d'exécution est un temps d'exécution sur ladite plateforme matérielle, et en ce que le découpage de traitement permettant d'obtenir le temps d'exécution le plus court parmi les temps d'exécution déterminés sur ladite plateforme matérielle est sélectionné ;
- le procédé comporte la détermination de l'ensemble de découpages de traitement possibles en fonction du nombre maximal de sous-ensembles de données à traiter et du nombre maximal de tâches exécutables en parallèle par une unité de calcul de la plateforme matérielle ;
- chaque groupe de données comporte un nombre égal de sous-ensembles de données ;
- ledit ensemble de données est représenté sous la forme d'une matrice à plusieurs dimensions, l'étape de détermination de découpages de traitement consistant en un découpage de ladite matrice en sous-matrices ;
- le procédé comprend une étape préalable d'analyse d'un graphe d'application fonctionnelle, et une étape d'extraction de suite d'opérations à appliquer pour un traitement donné à partir de ladite analyse ;
- le procédé comprend une étape préalable d'obtention d'un programme comportant des instructions de code de programmation mettant en oeuvre un découpage de traitement initial.

Selon un deuxième aspect, l'invention concerne un programme d'ordinateur comportant des instructions de code de programmation aptes à être mises en oeuvre par un processeur, caractérisé en ce qu'il est apte à mettre en oeuvre un procédé d'optimisation de traitement parallèle de données sur une plateforme matérielle tel que brièvement décrit ci-dessus.

Selon un troisième aspect, l'invention concerne l'utilisation d'un procédé d'optimisation de traitement parallèle de données sur une plateforme matérielle tel que brièvement décrit ci-dessus pour sélectionner une plateforme matérielle parmi une pluralité de plateformes matérielles disponibles, consistant à :
- mettre en oeuvre ledit procédé d'optimisation sur chacune des plateformes matérielles disponibles avec une même mesure de performance d'exécution et un même critère prédéterminé, permettant d'obtenir une valeur de mesure de performance d'exécution optimale pour chaque plateforme matérielle, et
- sélectionner une plateforme matérielle en fonction des valeurs de mesure de performance d'exécution optimales obtenues.

D'autres caractéristiques et avantages de l'invention ressortiront de la description qui en est donnée ci-dessous, à titre indicatif et nullement limitatif, en référence aux figures annexées, parmi lesquelles :
- la figure 1 est un schéma d'une plateforme matérielle à multiples unités de traitement,
- la figure 2 est une représentation schématique de partage d'espaces mémoire,
- la figure 3 illustre trois découpages de traitement d'un tableau monodimensionnel,
- la figure 4 illustre un découpage de traitement de tableau bi-dimensionnel, et
- la figure 5 est un organigramme d'un procédé d'optimisation de traitement parallèle des données selon l'invention.

L'invention sera décrite dans son application pour l'optimisation de code de programmation pour une plateforme matérielle comprenant une ou plusieurs cartes graphiques GPU, le code de programmation étant en langage OpenCL.

De manière plus générale, l'invention s'applique sur toute plateforme matérielle de haute performance à multiples unités de traitement, en particulier sur des plateformes hétérogènes incluant à la fois cartes graphiques GPU et processeurs généralistes multi-coeurs, et avec d'autres langages de programmation adaptés à la programmation parallèle.

L'invention s'applique également lorsque la plateforme matérielle est constituée de plusieurs plateformes matérielles de haute performance, ces plateformes étant aptes à communiquer via des communications réseau, par exemple en utilisant du « message passing ».

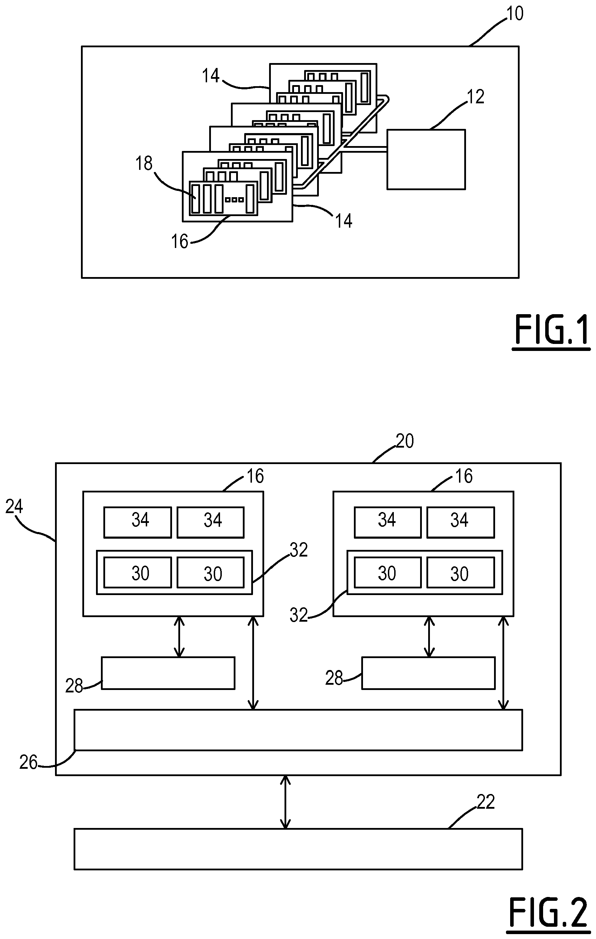

Comme illustré à la figure 1, un exemple de telle plateforme matérielle 10 est comprend une machine serveur 12, qui est apte à recevoir les instructions d'exécution et à distribuer l'exécution sur un ensemble de dispositifs de calcul 14, qui sont des multiprocesseurs, comme par exemple des cartes graphiques GPU. Les dispositifs de calcul 14 sont en nombre quelconque et sont soit physiquement à l'intérieur de la machine serveur 12, soit à l'intérieur d'autres machines, ou noeuds de calcul, accessibles soit directement, soit via un réseau de communications. Les dispositifs de calcul 14 sont aptes à mettre en oeuvre des tâches exécutables transmises par la machine serveur 12. Ainsi, l'invention s'applique sur une plateforme de calcul distribuée multi-noeuds et/ou multi dispositifs de calcul.

Chaque dispositif de calcul 14 comporte une ou plusieurs unités de calcul 16, chaque unité de calcul 16 comprenant elle-même une pluralité d'unités de traitement 18, ou coeurs de traitement, dans une architecture « multi-coeurs ».

La machine serveur 12 comprend au moins un processeur et une mémoire apte à stocker des données et des instructions, et elle est apte à exécuter un programme d'ordinateur comportant des instructions de code mettant en oeuvre un procédé d'optimisation de traitement parallèle de données selon l'invention. Un programme mettant en oeuvre l'invention est codé soit en un langage de programmation logicielle connue, par exemple le langage C ou C++, soit en instructions de code de type ISA (Instruction Set Architecture).

Un langage de programmation particulièrement adapté pour ce type de plateforme matérielle à architecture dite massivement parallèle est le langage OpenCL. Le langage OpenCL a été conçu plus particulièrement pour des systèmes hétérogènes multi-coeurs, comprenant par exemple à la fois un CPU multi-coeurs et une ou plusieurs cartes graphiques GPU.

Le langage OpenCL permet de gérer à la fois le parallélisme des tâches exécutables et le parallélisme des données, c'est-à-dire l'exécution en parallèle de tâches sur diverses unités de traitement disponibles et l'accès aux données dans des espaces mémoire séparés, contrairement à d'autres langages de programmation parallèle classiques, comme OpenMP qui impose un modèle de programmation en mémoire partagée.

La figure 2 illustre la hiérarchie des espaces mémoire définie par OpenCL, permettant l'accès parallèle aux données, pour un dispositif de calcul 14 comprenant deux unités de calcul 16 pour simplifier la description, la généralisation à un nombre quelconque d'unités de calcul étant directe.

Le modèle de mémoire 20 illustré à la figure 2 comporte un espace mémoire global 22 partagé par toutes les unités de calcul 16 d'un dispositif de calcul 14, qui est par exemple à l'extérieur du dispositif de calcul 14, par exemple dans le cas d'une mémoire de type « off-chip » d'un GPU.

Le modèle de mémoire 20 comprend également un espace mémoire 24, dans le dispositif de calcul 14, partitionné en un espace de mémoire constante 26, pour stocker des données constantes pour accès en lecture seule pour toutes les unités de calcul 16 du dispositif de calcul 14 durant l'exécution d'une tâche effectuant une suite d'opérations calculatoires.

Le dispositif de calcul 14 comprend également des mémoires locales respectives 28, chaque mémoire locale pouvant être utilisée par une tâche 30, également appelée « work-item » dans la spécification OpenCL 1.0, d'un groupe de tâches 32, appelé « work-group » dans la spécification OpenCL 1.0, exécutées par une unité de traitement 18.

De plus, chaque unité de calcul 16 comprend un ensemble de mémoires privées 34, avec une mémoire privée par unité de traitement 18 de l'unité de calcul 16, analogue aux registres dans un CPU avec une seule unité de traitement.

Un espace de traitement OpenCL est un espace n dimensionnel, avec n compris entre 1 et 3, et peut être vu comme une matrice multi-dimensionnelle, chaque élément de cette matrice correspondant à une tâche exécutable ou « work-item », effectuant une suite d'opérations calculatoires sur un sous-ensemble de données d'un ensemble de données à traiter.

Dans un exemple simple de mise en oeuvre, les données sont des pixels d'image numérique, stockés dans un tableau bi-dimensionnel de largeur 1024 et de hauteur 768, un traitement appliqué aux données est l'application d'une transformation, par exemple une transformation de Fourier, implémentée par une fonction FFT (Fast Fourier Transform) 1024, prenant en entrée un sous-ensemble de données de 1024 pixels pour obtenir en sortie 1024 échantillons dans le domaine de Fourier. En pratique, la transformation FFT1024, qui effectue une suite d'opérations calculatoires sur un sous-ensemble de données, est itérée sur l'ensemble des lignes du tableau bi-dimensionnel de pixels, de manière indépendante et donc parallélisable.

L'ensemble de données, c'est-à-dire le tableau bi-dimensionnel de pixels, est divisible en 768 sous-ensemble de données, une même tâche exécutable (FFT1024) effectuant une même suite d'opérations sur chaque sous-ensemble de données.

Dans cet exemple, l'espace de traitement définissant l'ensemble des tâches exécutables à effectuer sur des sous-ensembles de données peut être modélisé comme un tableau monodimensionnel, chaque élément du tableau correspondant à une tâche - FFT1024 - à exécuter sur un sous-ensemble de données, ici une ligne de pixels.

Selon la plateforme matérielle, un nombre maximal de tâches exécutables sont aptes à être exécutées en parallèle par les unités de traitement présentes. Dans cet exemple de réalisation, si, au maximum, 128 tâches exécutables en parallèle sont disponibles, il existe plusieurs manières d'associer ces tâches exécutables aux 768 sous-ensembles de données à traiter, ce qui permet d'en déduire plusieurs possibilités de découpages de traitement.

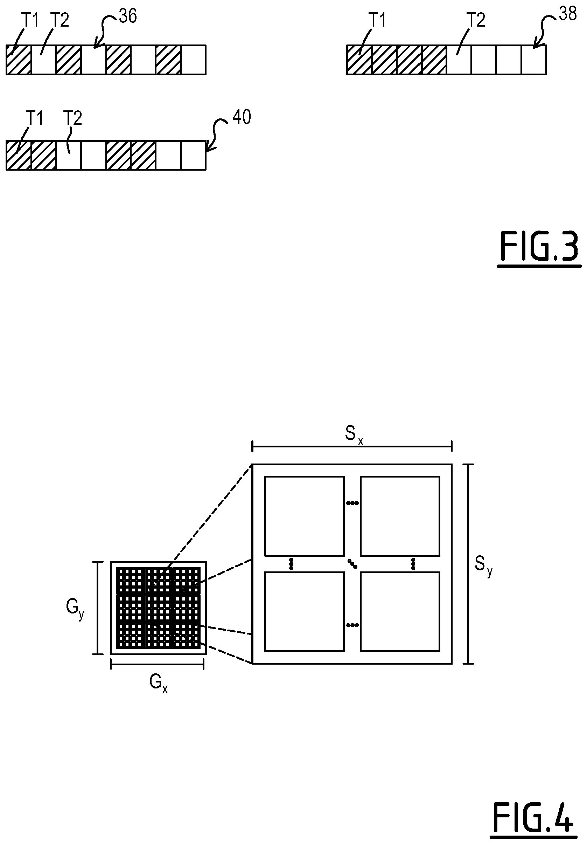

Une illustration schématique de découpage de traitement par rapport à un tableau d'espace de traitement monodimensionnel est donnée en figure 3.

Dans cet exemple, le tableau comprend huit « work-items » ou sous-ensembles de données à traiter, et, pour la simplicité de l'explication, seulement deux unités de traitement aptes à mettre en oeuvre deux tâches exécutables T1, T2 en parallèle sont considérées.

La figure 3 montre trois découpages de traitement, 36, 38 et 40, dans chaque représentation un carré hachuré représentant un traitement par la tâche exécutable T1 et un carré non hachuré représentant un traitement par la tâche exécutable T2.

Dans le découpage 36, les tâches exécutables en parallèle disponibles, T1 et T2, sont distribuées de manière alternée cyclique. Dans l'exemple de découpage 38 elles sont regroupées par blocs de quatre sous-ensembles de données consécutifs, et dans l'exemple de découpage 40 les tâches T1 et T2 prennent en charge des blocs de deux sous-ensembles de données consécutifs, de manière cyclique.

Ces divers découpages ont notamment un effet en termes d'accès mémoire consécutifs effectués par chacune de tâches exécutables, et il s'avère que selon l'architecture matérielle, les temps d'exécution peuvent différer, notamment à cause des temps d'accès mémoire en lecture/écriture ainsi que le temps de transfert des données via les bus de communication.

De manière plus générale, comme illustré à la figure 4 avec un tableau bi-dimensionnel, OpenCL offre la possibilité de définir l'ensemble de tâches exécutables en parallèle à effectuer sur les données, ou « work-items », les dimensions du tableau « global work size » étant notées Gx et Gy dans cet exemple. Les tâches élémentaires ou « work-items » sont regroupées en groupes de tâches « work-groups » comportant chacun un même nombre de tâches, défini par le « local work size », ici défini par Sx et Sy. Les tâches élémentaires d'un groupe de tâches sont aptes à communiquer et à se synchroniser pour un accès coordonné à la mémoire locale 28. Les groupes de tâches sont exécutés en parallèle, et le nombre maximal de tâches par groupe de tâches est limité par les limites de la plateforme matérielle.

En respectant les contraintes de la plateforme matérielle en termes de nombre de tâches aptes à être lancées en parallèle, dépendant du nombre d'unités de traitement, de très nombreux découpages de traitement sont possibles, en particulier lorsque l'espace de traitement est multi-dimensionnel.

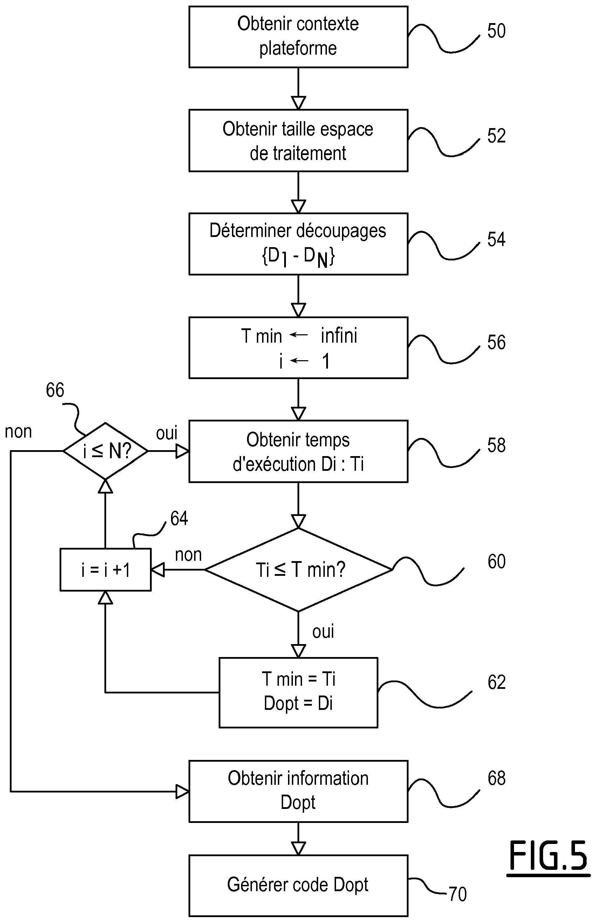

La figure 5 est un organigramme d'un procédé d'optimisation de traitement parallèle des données selon l'invention, l'optimisation considérée dans cet exemple de mise en oeuvre étant une optimisation en termes de temps d'exécution, le critère d'optimisation associé étant la minimisation du temps d'exécution.

Le procédé est explicité ici pour un traitement donné, dans lequel sont fournies des données d'entrée à traiter, et des données traitées sont fournies en sortie. Le traitement est adapté pour une mise en oeuvre parallèle en ce qu'il comporte une répétition d'une même suite d'opérations, à effectuer sur des sous-ensembles de données d'entrée. Bien sûr, une suite d'opérations peut se limiter à une seule opération effectuée sur un sous-ensemble réduit à une donnée d'entrée, par exemple un pixel d'une image. Dans un exemple très simpliste, une opération consistant à ajouter une valeur donnée v à tous les pixels d'une image I(p,q) représentée sous forme de tableau de pixels de taille PxQ, le traitement à appliquer consiste en l'application de PxQ fois la même opération, à savoir l'ajout de la valeur v à la valeur de chaque pixel de l'image : I'(p,q)=I(p,q)+v. Les données d'entrée sont l'ensemble des valeurs des pixels de l'image I(p,q), et les données traitées l'ensemble des valeurs de pixel modifiées I'(p,q). En termes de programmation, la répétition d'une suite d'opérations s'exprime en nombre de tours de boucles de calcul, par exemple des boucles « for » en langage C.

Par ailleurs, on note qu'une application fonctionnelle peut comprendre plusieurs traitements successifs, indépendants les uns des autres. Dans ce cas, on applique le procédé de l'invention de manière analogue pour chacun des traitements compris dans l'application fonctionnelle.

Une première étape 50 du procédé consiste à obtenir le contexte de la plateforme matérielle 10 utilisée, et en particulier le nombre maximal de tâches exécutables en parallèle par une unité de calcul 16 de la plateforme matérielle 10. Par exemple, à l'heure actuelle, les cartes graphiques NVIDIA® GTX supportent un nombre maximal de 1024 tâches exécutables simultanément par un multiprocesseur.

L'étape 50 est une étape préalable exécutée une seule fois, quelque soit le nombre de traitements successifs à optimiser.

Ensuite, à l'étape 52, la taille de l'espace de traitement, pour le traitement donné, est déterminée. Comme expliqué précédemment, cette taille dépend des données d'entrée et des suites d'opérations à effectuer. En termes OpenCL, il s'agit de déterminer la taille « global work size », selon ses une, deux ou trois dimensions, définissant l'espace de traitement matriciel multidimensionnel.

En pratique, plusieurs variantes de mise en oeuvre sont envisagées.

Selon une première variante de mise en oeuvre, en entrée du procédé est fourni un programme comportant des instructions de code écrit en un langage adapté pour l'exécution de code parallèle, par exemple OpenCL, mais ce programme n'est pas optimisé pour assurer une configuration d'exécution tirant le meilleur parti de la plateforme matérielle. Dans ce cas, l'information correspondant à la taille de l'espace de traitement est simplement extraite des instructions de code du programme non optimisé fourni en entrée. Typiquement, un tel programme comportant des instructions de code non optimisé définit un découpage initial « naïf » non optimisé, donc une taille initiale pour le « local work size ».

En variante, le procédé reçoit en entrée un graphe d'application définissant une application fonctionnelle, comportant un ou plusieurs traitements à effectuer. Chaque traitement à effectuer est défini via le graphe d'application. En pratique, on peut utiliser un outil existant pour générer un graphe d'application à partir d'une application fonctionnelle, par exemple l'outil Ptolemy Il Software fourni par l'Université de Berkeley.

L'étape 52 consiste alors à analyser le graphe d'application, à décomposer en traitements et pour chaque traitement donné, à identifier la suite d'opérations à effectuer de manière répétitive et le nombre d'appels ou nombre de tours de boucle calcul, qui est directement lié au nombre de données à traiter.

Ensuite, à l'étape suivante 54, un ensemble de découpages de l'espace de traitement, ou découpages de traitement, D1 à DN, est déterminé, chaque découpage de traitement correspondant au découpage de l'ensemble de données en un nombre de groupes de données et à l'assignation d'au moins une tâche exécutable, apte à exécuter la suite d'opérations, à chaque sous-ensemble de données du groupe de données. En pratique, pour un dispositif de calcul 14 donné, chaque groupe du découpage comporte le même nombre de sous-ensembles de données, et le nombre total de tâches exécutables par groupe est inférieur ou égal au nombre maximal de tâches exécutables en parallèle fourni par la plateforme matérielle, obtenu à l'étape 50 d'extraction du contexte.

En termes OpenCL, la détermination de découpages consiste à déterminer diverses valeurs de « local work size » possibles.

Par exemple, pour un espace de traitement à trois dimensions, dont les dimensions sont les suivantes :
global_work_size[0]=2000
global_work_size[1]=16
global_work_size[2]=18

Les découpages suivants sont testés:
D1: local_work_size[0]=500
   local_work_size[1]=1
   local_work_size[2]=1

D1 correspond à un découpage en 4x16x18 groupes de tâches.
D2: local_work_size[0]=4
   local_work_size[1]=16
   local_work_size[2]=1
D2 correspond à 500x1x18 groupes de tâches.

Selon le mode de réalisation préféré, tous les découpages de traitement possibles sont déterminés à l'étape 54. Dans l'exemple numérique explicité ci-dessus, l'ensemble des découpages comprend toutes les variantes de découpage en groupes de taille égale d'un espace matriciel à trois dimensions de taille 2000x16x18, ce qui donne une combinatoire assez élevée, mais gérable par un traitement automatique.

En variante, un nombre de découpages de traitement donné D, D≥2, est déterminé, en utilisant un ou plusieurs critères prédéterminés, prenant en compte par exemple le nombre maximal de tâches exécutables en parallèle par une unité de calcul 16 de la plateforme matérielle 10.

A l'étape suivante 56, un paramètre algorithmique Tmin, destiné, dans ce mode de réalisation, à stocker le temps minimum d'exécution, est initialisé à une très grande valeur, par exemple la valeur maximale disponible, et un compteur i est initialisé à la valeur un.

A l'étape 58, un programme comportant des instructions de code de programmation correspondant au découpage de traitement Di est généré et l'exécution de ce programme est lancée sur la plateforme matérielle, afin d'obtenir une valeur d'une mesure de performance d'exécution, qui est dans ce mode de réalisation une mesure du temps d'exécution effectif Ti associé au découpage de traitement Di.

En variante, d'autres mesures de performance d'exécution, comme par exemple la consommation d'électricité, ou la dissipation thermique associées à une exécution, sont mises en oeuvre à la place de la mesure de temps d'exécution. Pour chaque mesure mise en oeuvre, un critère d'optimisation prédéterminé associé est pris en considération, permettant de sélectionner le découpage de traitement optimal correspondant.

En pratique, le traitement est de préférence effectué avec des données d'entrée quelconques, et non avec des données réelles d'une application fonctionnelle, puisque le temps d'exécution ne devrait pas être dépendant des valeurs des données d'entrée.

En variante, afin d'éliminer l'influence de facteurs externes, l'exécution du programme correspondant au découpage de traitement Di est lancée un nombre donné de fois, par exemple 10 fois, et le temps correspondant au temps d'exécution est mémorisé pour chacune des exécutions. Ensuite, le temps d'exécution minimum est retenu dans la variable Ti.

De manière plus générale, l'exécution est lancée un nombre donné de fois, et la valeur de mesure Ti associée au découpage Di est obtenue par calcul d'une statistique des valeurs mémorisées, par exemple le minimum, la moyenne ou une statistique d'ordre supérieur. La statistique calculée est mémorisée comme valeur de mesure Ti de la performance d'exécution associée au découpage Di.

Ensuite, un test 60 est appliqué pour déterminer si la valeur du temps d'exécution Ti associé au découpage de traitement Di est inférieure à la valeur Tmin, le critère d'optimisation étant la minimisation du temps d'exécution dans ce mode de réalisation. En cas de réponse positive, le test 60 est suivi d'une étape 62 dans laquelle la valeur de Tmin est mise à la valeur Ti et le découpage de traitement Di est enregistré comme découpage de traitement optimal Dopt.

L'étape 62 est suivie d'une étape 64 d'incrémentation du compteur i de un.

En cas de réponse négative au test 60, donc si le temps d'exécution estimé n'est pas inférieur à Tmin, l'étape 60 est suivie de l'étape 64 d'incrémentation du compteur i.

L'étape 64 est suivie d'un test 66 ayant pour objet de vérifier si le nombre maximal de découpages de traitement a été atteint.

Si ce n'est pas le cas, donc si i est inférieur ou égal à N, nombre total de découpages, le test 66 est suivi de l'étape 58 précédemment décrite.

Dans le cas contraire, tous les découpages de traitement prévus ont été testés, et le test 66 est suivi d'une étape 68 d'obtention d'informations relatives au découpage de traitement ayant le temps d'exécution le plus court, ou découpage de traitement optimal Dopt. Les informations de découpage sont récupérées, typiquement les informations définissant le « local work size » dans la mise en oeuvre avec le langage de programmation OpenCL.

Ces informations permettent ensuite de générer des instructions de code de programmation mettant en oeuvre le découpage de traitement optimal en termes de temps d'exécution à l'étape 70.

Selon une première variante de mise en oeuvre dans laquelle le procédé de l'invention est appliqué avec en entrée un programme comportant des instructions de code de programmation de type OpenCL non optimisé, l'étape 70 consiste typiquement à remplacer les valeurs de « local work size » initiales par les valeurs de « local work size » correspondant au découpage de traitement optimal.

Selon une deuxième variante de mise en oeuvre, dans laquelle le procédé de l'invention est appliqué avec en entrée un graphe d'application, l'étape 70 consiste a générer effectivement un ensemble d'instructions de code de programmation, en langage OpenCL dans cet exemple de réalisation, mettant en oeuvre le découpage de traitement optimal.

Selon une variante, les instructions de code de programmation correspondant à chaque découpage générées à l'étape 58 sont stockées en mémoire, et l'étape 70 consiste à simplement récupérer en mémoire les instructions de code de programmation correspondant au découpage de traitement optimal Dopt.

Il est bien entendu que des variantes de mises en oeuvre, à la portée de l'homme du métier, font partie intégrante de l'invention. Par exemple, les étapes de détermination d'un découpage de traitement et d'obtention du temps d'exécution associé sont effectuées, en variante, en une seule étape.

En pratique, on a pu constater une augmentation de la vitesse d'exécution d'un traitement allant jusqu'à un facteur compris entre cinq et huit entre une programmation naïve sans optimisation et une programmation suivant le découpage de traitement optimal fourni par l'invention.

L'invention a été décrite plus particulièrement dans le cas de l'utilisation du langage de programmation parallèle OpenCL. En variante, il est possible par exemple d'utiliser le procédé d'optimisation de traitement parallèle de l'invention avec d'autres langages de programmation parallèle au comportement similaire, par exemple avec le langage CUDA, langage propriétaire de la société NVIDIA.

La terminologie CUDA exprime le découpage en "thread blocks" et en "grid", exprimés dans un espace n dimensionnel, avec n compris entre 1 et 3 (matrices à trois dimensions):
- les "blocks" déterminent le nombre de traitements exécutables en parallèle sur les unités de calculs 18 d'une même unité de calcul 16. Ils sont équivalents aux "local_work_size" en langage OpenCL.
- la "grid", qui exprime le nombre de "blocks" qui vont être répétés pour réaliser l'intégralité du traitement à effectuer.

L'adaptation du procédé de l'invention appliqué au langage CUDA fera varier la taille des "blocks" et de la "grid", de manière à déterminer la taille des block/grid optimal au sens d'un critère prédéterminé, qui permet d'atteindre par exemple une meilleure performance en temps de calcul ou une consommation électrique plus faible. En effet, dans le cas de l'application du langage CUDA, le fait de faire varier les tailles des éléments « blocks » et « grid » revient à réaliser une pluralité de découpages de traitement, ces divers découpages de traitement étant ensuite testés pour déterminer un découpage de traitement optimal au sens du critère prédéterminé, comme expliqué dans le mode de réalisation détaillé ci-dessus en référence à la figure 5.

Il a également été constaté que les améliorations en termes de performance d'exécution apportées par l'invention dépendent en partie de la plateforme matérielle utilisée, même à nombre égal d'unités de traitement. Une utilisation avantageuse de l'invention serait de sélectionner, parmi diverses plateformes matérielles, à nombre donné d'unités de traitement, celle qui est la plus adéquate pour une application fonctionnelle donnée, selon un critère de performance d'exécution donné.

Selon une mise en oeuvre, l'utilisation du procédé d'optimisation de traitement parallèle de données sur une plateforme matérielle de l'invention pour sélectionner une plateforme matérielle parmi une pluralité de plateformes matérielles disponibles, consiste à :
- mettre en oeuvre le procédé d'optimisation décrit ci-dessus sur chacune des plateformes matérielles disponibles avec une même mesure de performance d'exécution et un même critère prédéterminé, permettant d'obtenir une valeur de mesure de performance d'exécution optimale pour chaque plateforme matérielle,
- sélectionner une plateforme matérielle en fonction des valeurs de mesure de performance d'exécution/consommation optimales obtenues.

Typiquement, le même critère est utilisé dans l'étape de sélection pour choisir la plateforme matérielle correspondant à la meilleure valeur de mesure optimale. Par exemple, lorsque le critère d'optimisation est la minimisation du temps d'exécution, la plateforme matérielle permettant d'obtenir le temps d'exécution le plus court avec le découpage de traitement optimal est sélectionnée.

Avantageusement, l'invention permet d'optimiser le traitement parallèle des données de manière adaptative par rapport à toute plateforme matérielle disponible.

## Revendications

1. Procédé d'optimisation de traitement parallèle de données sur une plateforme matérielle (10) comprenant au moins une unité de calcul (16) comprenant une pluralité d'unités de traitement (18) aptes à exécuter en parallèle une pluralité de tâches exécutables, dans lequel l'ensemble de données à traiter est décomposé en sous-ensembles de données, une même suite d'opérations étant effectuée sur chaque sous-ensemble de données,
**caractérisé en ce qu'**il comprend les étapes de :
- obtention (50, 52) du nombre maximal de sous-ensembles de données à traiter par une même suite d'opérations, et d'un nombre maximal de tâches exécutables en parallèle par une unité de calcul (16) de la plateforme matérielle (10),
- détermination (54) d'au moins deux découpages, Di, de traitement, chaque découpage de traitement correspondant au découpage de l'ensemble de données en un nombre de groupes de données, et à l'assignation d'au moins une tâche exécutable, apte à exécuter ladite suite d'opérations, à chaque sous-ensemble de données dudit groupe de données, le nombre total de tâches exécutables par groupe de données étant inférieur ou égal audit nombre maximal de tâches,
- obtention (58) d'un programme comportant des instructions de code de programmation mettant en oeuvre ledit découpage de traitement,
- obtention (58) d'une valeur d'une mesure de performance d'exécution associée à l'exécution dudit programme sur ladite plateforme matérielle,
- sélection (60, 62) du découpage de traitement permettant d'obtenir une valeur de mesure optimale selon un critère prédéterminé, et
- obtention (68) d'informations permettant de générer des instructions de code de programmation mettant en oeuvre ledit découpage de traitement sélectionné,
comprenant, après l'étape d'obtention (58) d'un programme comportant des instructions de code de programmation mettant en oeuvre un découpage de traitement, les étapes de :
- exécution dudit programme sur ladite plateforme matérielle (10) un nombre prédéterminé de fois et mémorisation de la valeur de mesure de performance d'exécution correspondant à chaque exécution, et
- calcul d'une statistique à partir des valeurs de mesure de performance d'exécution mémorisées et
- mémorisation de ladite statistique calculée comme valeur de mesure de performance d'exécution associée audit découpage de traitement.

2. Procédé selon la revendication 1, **caractérisé en ce que** ladite valeur d'une mesure de performance d'exécution est un temps d'exécution, Ti, sur ladite plateforme matérielle (10), et **en ce que** le découpage de traitement, Dopt, permettant d'obtenir le temps d'exécution, Tmin, le plus court parmi les temps d'exécution déterminés sur ladite plateforme matérielle est sélectionné.

3. Procédé selon l'une des revendications 1 ou 2, **caractérisé en ce que** ladite valeur d'une mesure de performance d'exécution comprend une consommation d'électricité associée à une exécution sur ladite plateforme matérielle.

4. Procédé selon l'une des revendications 1 à 3, **caractérisé en ce que** ladite valeur d'une mesure de performance d'exécution comprend une dissipation thermique associée à une exécution sur ladite plateforme matérielle.

5. Procédé selon l'une quelconque des revendications 1 à 4, **caractérisé en ce qu'**il comporte la détermination (54) de l'ensemble de découpages de traitement possibles en fonction du nombre maximal de sous-ensembles de données à traiter et du nombre maximal de tâches exécutables en parallèle par une unité de calcul (16) de la plateforme matérielle (10).

6. Procédé selon l'une quelconque des revendications 1 à 5, **caractérisé en ce que** chaque groupe de données comporte un nombre égal de sous-ensembles de données.

7. Procédé selon l'une quelconque des revendications précédentes, **caractérisé en ce que** ledit ensemble de données est représenté sous la forme d'une matrice à plusieurs dimensions, et **en ce que** l'étape de détermination (54) de découpages de traitement consiste en un découpage de ladite matrice en sous-matrices.

8. Procédé selon l'une quelconque des revendications 1 à 7, **caractérisé en ce qu'**il comprend une étape préalable d'analyse d'un graphe d'application fonctionnelle, et une étape d'extraction de suite d'opérations à appliquer pour un traitement donné à partir de ladite analyse.

9. Procédé selon l'une quelconque des revendications 1 à 7, **caractérisé en ce qu'**il comprend une étape préalable d'obtention d'un programme comportant des instructions de code de programmation mettant en oeuvre un découpage de traitement initial.

10. Programme d'ordinateur comportant des instructions de code de programmation aptes à être mises en oeuvre par un processeur, **caractérisé en ce qu'**il est apte à mettre en oeuvre un procédé d'optimisation de traitement parallèle de données sur une plateforme matérielle selon l'une quelconque des revendications 1 à 9.

11. Utilisation d'un procédé d'optimisation de traitement parallèle de données sur une plateforme matérielle (10) selon l'une quelconque des revendications 1 à 9 pour sélectionner une plateforme matérielle parmi une pluralité de plateformes matérielles disponibles, consistant à :
- mettre en oeuvre ledit procédé d'optimisation sur chacune des plateformes matérielles disponibles (10) avec une même mesure de performance d'exécution et un même critère prédéterminé, permettant d'obtenir une valeur de mesure de performance d'exécution optimale pour chaque plateforme matérielle, et
- sélectionner une plateforme matérielle (10) en fonction des valeurs de mesure de performance d'exécution optimales obtenues.

## Patentansprüche

1. Verfahren zum Optimieren einer Parallelverarbeitung von Daten auf einer Hardware-Plattform (10), die mindestens eine Recheneinheit (16) aufweist, die eine Mehrzahl von Verarbeitungseinheiten (18) aufweist, die in der Lage sind, parallel eine Mehrzahl von ausführbaren Aufgaben auszuführen, wobei die Gesamtheit von zu verarbeitenden Daten in Teilmengen von Daten zerlegt ist, wobei bei jeder Teilmenge von Daten eine gleiche Abfolge von Vorgängen durchgeführt wird,
**dadurch gekennzeichnet, dass** es die folgenden Schritte aufweist:
- Beschaffen (50, 52) der maximalen Anzahl von Teilmengen von zu verarbeitenden Daten durch eine gleiche Abfolge von Vorgängen, und einer maximalen Anzahl von Aufgaben, die parallel durch eine Recheneinheit (16) der Hardware-Plattform (10) durchzuführen sind,
- Bestimmen (54) von mindestens zwei Verarbeitungssegmentierungen Di, wobei jede Verarbeitungssegmentierung der Segmentierung der Gesamtheit von Daten in eine Anzahl von Datengruppen und dem Zuweisen mindestens einer ausführbaren Aufgabe, die geeignet ist, die Abfolge von Vorgängen durchzuführen, an jede Teilmenge von Daten der Datengruppe entspricht, wobei die Gesamtanzahl von pro Datengruppe ausführbaren Aufgaben kleiner oder gleich der maximalen Anzahl von Aufgaben ist,
- Beschaffen (58) eines Programms, welches Programmiercodebefehle aufweist, die die Verarbeitungssegmentierung durchführen,
- Beschaffen (58) eines Wertes einer Ausführungsleistungsmessung, der mit der Ausführung des Programms auf der Hardware-Plattform verknüpft ist,
- Auswählen (60, 62) der Verarbeitungssegmentierung, die es ermöglicht, einen optimalen Messwert gemäß einem vorbestimmten Kriterium zu beschaffen, und
- Beschaffen (68) von Informationen, die ein Generieren von Programmiercodebefehlen ermöglichen, die die ausgewählte Verarbeitungssegmentierung durchführen,
aufweisend, nach dem Schritt des Beschaffens (58) eines Programms, welches Programmiercodebefehle aufweist, die eine Verarbeitungssegmentierung durchführen, die folgenden Schritte:
- Ausführen des Programms auf der Hardware-Plattform (10) eine vorbestimmte Anzahl von Malen und Speichern des Ausführungsleistungsmesswertes, der jeder Ausführung entspricht, und
- Berechnen einer Statistik aus den gespeicherten Ausführungsleistungsmesswerten und
- Speichern der berechneten Statistik als Ausführungsleistungsmesswert, der mit der Verarbeitungssegmentierung verknüpft ist.

2. Verfahren gemäß Anspruch 1, **dadurch gekennzeichnet, dass** der Wert einer Ausführungsleistungsmessung eine Ausführungszeit Ti auf der Hardware-Plattform (10) ist, und dass die Verarbeitungssegmentierung Dopt, die es ermöglicht, die kürzeste Ausführungszeit Tmin von den auf der Hardware-Plattform bestimmten Ausführungszeiten zu erhalten, ausgewählt wird.

3. Verfahren gemäß einem der Ansprüche 1 oder 2, **dadurch gekennzeichnet, dass** der Wert einer Ausführungsleistungsmessung einen Stromverbrauch aufweist, der mit einer Ausführung auf der Hardware-Plattform verknüpft ist.

4. Verfahren gemäß einem der Ansprüche 1 bis 3, **dadurch gekennzeichnet, dass** der Wert einer Ausführungsleistungsmessung eine Wärmeableitung aufweist, die mit einer Ausführung auf der Hardware-Plattform verknüpft ist.

5. Verfahren gemäß irgendeinem der Ansprüche 1 bis 4,
**dadurch gekennzeichnet, dass** es das Bestimmen (54) der Gesamtheit von möglichen Verarbeitungssegmentierungen in Abhängigkeit von der maximalen Anzahl von Teilmengen von Daten, die zu verarbeiten sind, und von der maximalen Anzahl von Aufgaben, die parallel durch eine Recheneinheit (16) der Hardware-Plattform (10) ausführbar sind, aufweist.

6. Verfahren gemäß irgendeinem der Ansprüche 1 bis 5,
**dadurch gekennzeichnet, dass** jede Datengruppe eine gleiche Anzahl von Datenteilmengen aufweist.

7. Verfahren gemäß irgendeinem der vorhergehenden Ansprüche, **dadurch gekennzeichnet, dass** die Gesamtheit von Daten in Form einer Matrix mit mehreren Dimensionen repräsentiert wird, und dass der Schritt des Bestimmens (54) von Verarbeitungssegmentierungen aus einem Segmentieren der Matrix in Untermatrizen besteht.

8. Verfahren gemäß irgendeinem der Ansprüche 1 bis 7,
**dadurch gekennzeichnet, dass** es einen vorangehenden Schritt des Analysierens eines Funktionsanwendungsgraphen und einen Schritt des Extrahierens einer Folge von Vorgängen aufweist, die für eine gegebene Verarbeitung ausgehend von der Analyse anzuwenden sind.

9. Verfahren gemäß irgendeinem der Ansprüche 1 bis 7,
**dadurch gekennzeichnet, dass** es einen vorangehenden Schritt des Beschaffens eines Programms aufweist, das Programmiercodebefehle aufweist, die eine Anfangs-Verarbeitungssegmentierung durchführen.

10. Computerprogramm, aufweisend Programmiercodebefehle, die geeignet sind, durch einen Prozessor durchgeführt zu werden, **dadurch gekennzeichnet, dass** es in der Lage ist, ein Verfahren zum Optimieren der Parallelverarbeitung von Daten auf einer Hardware-Plattform gemäß irgendeinem der Ansprüche 1 bis 9 durchzuführen.

11. Verwendung eines Verfahrens zum Optimieren einer Parallelverarbeitung von Daten auf einer Hardware-Plattform (10) gemäß irgendeinem der Ansprüche 1 bis 9, um eine Hardware-Plattform aus einer Mehrzahl von verfügbaren Hardware-Plattformen auszuwählen, bestehend aus:
- dem Durchführen des Optimierungsverfahrens auf jeder der verfügbaren Hardware-Plattformen (10) mit einer gleichen Ausführungsleistungsmessung und einem gleichen vorbestimmten Kriterium, welches das Beschaffen eines optimalen Ausführungsleistungsmesswertes für jede Hardware-Plattform ermöglicht, und
- dem Auswählen einer Hardware-Plattform (10) in Abhängigkeit von den erhaltenen optimalen Ausführungsleistungsmesswerten.

## Claims

1. A method of parallel data processing optimization on a hardware platform (10) comprising at least one computing unit (16) comprising a plurality of processing units (18) able to execute a plurality of executable tasks in parallel, wherein the data set to be processed is broken down into data subsets, a same sequence of operations being carried out on each data subset,
**characterized in that** it comprises the following steps:
- obtaining (50, 52) the maximum number of data subsets to be processed by a same sequence of operations, and a maximum number of tasks executable in parallel by a computing unit (16) of the hardware platform (10),
- determining (54) at least two processing divisions Di, each processing division corresponding to the division of the data set into a number of groups of data, and assigning at least one executable task, able to execute said sequence of operations, to each data subset of said group of data, the total number of executable tasks per data group being less than or equal to said maximum number of tasks,
- obtaining (58) a program including programming code instructions implementing said processing division,
- obtaining (58) a value of an execution performance measurement associated with the execution of said program on said hardware platform,
- selecting (60, 62) the processing division making it possible to obtain an optimal measuring value according to a predetermined criterion, and
- obtaining (68) information making it possible to generate programming code instructions implementing said selected processing division,
comprising, after the step for obtaining (58) a program including programming code instructions implementing a processing division, the following steps:
- executing said program on said hardware platform (10) a predetermined number of times and storing the execution performance measurement value corresponding to each execution, and
- calculating a statistic from the stored execution performance measurement values, and
- storing said calculated statistic as execution performance measurement value associated with said processing division.

2. The method according to claim 1, **characterized in that** said value of an execution performance measure is an execution time, Ti, on said hardware platform (10), and **in that** said processing division, Dopt, making it possible to obtain the shortest execution time, Tmin, from among the execution times determined on said hardware platform is selected.

3. The method according to one of claims 1 or 2, **characterized in that** said value of an execution performance measurement comprises an electricity consumption associated with an execution on said hardware platform.

4. The method according to one of claims 1 to 3, **characterized in that** said value of an execution performance measurement comprises a thermal dissipation associated with an execution on said hardware platform.

5. The method according to any one of claims 1 to 4, **characterized in that** it includes determining (54) the set of possible processing divisions as a function of the maximum number of data subsets to be processed and the maximum number of tasks executable in parallel by a computing unit (16) of the hardware platform (10).

6. The method according to any one of claims 1 to 5, **characterized in that** each data group includes an equal number of data subsets.

7. The method according to any one of the preceding claims, **characterized in that** said data set is represented in the form of a multidimensional matrix, and **in that** the step for determining (54) processing divisions consists of dividing said matrix into sub-matrices.

8. The method according to any one of claims 1 to 7, **characterized in that** it comprises a step for prior analysis of a functional application graph, and a step for extracting a sequence of operations to be applied for a given processing from said analysis.

9. The method according to any one of claims 1 to 7, **characterized in that** it comprises a prior step for obtaining a program including programming code instructions implementing an initial processing division.

10. A computer program including programming code instructions able to be implemented by a processor, **characterized in that** it is able to implement a method of parallel data processing optimization on a hardware platform according to any one of claims 1 to 9.

11. A use of a method of parallel data processing optimization on a hardware platform (10) according to any one of claims 1 to 9 to select a hardware platform from among a plurality of available hardware platforms, consisting of:
- implementing said optimization method on each of the available hardware platforms (10) with a same execution performance measurement and a same predetermined criterion, making it possible to obtain an optimal execution performance measurement value for each hardware platform, and
- selecting a hardware platform (10) based on the obtained optimal execution performance measurement values.
